# EUROPÄISCHE PATENTSCHRIFT

(11) **EP 1 960 680 B1**
(45) Veröffentlichungstag und Bekanntmachung des Hinweises auf die Patenterteilung: **11.11.2009**
(21) Anmeldenummer: 06840872.3
(22) Anmeldetag: 13.12.2006
(51) Int. Cl.: F16C 17/02, F16C 33/08, F16C 33/14, F16C 35/02

(54) **LAGERSCHALE UND VERFAHREN ZU IHRER HERSTELLUNG**
BEARING SHELL AND METHOD FOR ITS PRODUCTION
COQUE DE PALIER ET PROCÉDÉ POUR SA FABRICATION

(30) Priorität: 13.12.2005 DE 102005080637
(43) Veröffentlichungstag der Anmeldung: 27.08.2008
(73) Patentinhaber: Federal-Mogul Wiesbaden GmbH, 65201 Wiesbaden (DE)
(72) Erfinder: SCHÖNEICH, Guido, 65375 Ostrich-Winkel (DE)
(74) Vertreter: Fuchs
(86) Internationale Anmeldenummer: PCT/DE2006/002237
(87) Internationale Veröffentlichungsnummer: WO 2007/076803

(56) Entgegenhaltungen:
- CH-A- 231 312
- CH-A- 345 206
- DE-U1- 8 605 148
- US-A- 2 624 105
- US-A1- 2004 208 407

## Beschreibung

Die Erfindung betrifft eine Lagerbuchse mit mindestens einem Fenster, dessen Randbegrenzung in Buchsenlängsrichtung gegenüberliegend einen ersten Scheitel und einen zweiten Scheitel aufweist. Die Erfindung betrifft auch eine besondere Verwendung dieser Lagerbuchse sowie ein Herstellverfahren.

Derartige Lagerbuchsen werden beispielsweise in Bremssätteln von Kraftfahrzeugen eingesetzt. Bei einer mit Feststellbremse kombinierten Betriebsbremse ist es erforderlich, dass die Lagerbuchse mindestens ein Fenster aufweist, durch das ein entsprechender Stift in die Buchse eingreifen kann, wenn die Feststellbremse betätigt wird.

Beim Einbau dieser Buchsen in das Gehäuse, das beispielsweise aus Aluminium bestehen kann, können durch die scharfkantige Begrenzung des Fensters Späne entstehen, die die Funktion des Lagers beeinträchtigen können. Dieser Nachteil tritt insbesondere bei Buchsen mit Stoß auf, da die Teilflächen der Buchse beim Einpressen der Buchse an der einen Seite zusammengepresst und an der gegenüberliegenden Seite gespreizt werden. Aufgrund dieser Deformation der Lagerbuchse wird die Spanbildung insbesondere dann begünstigt, wenn sich das Fenster im Bereich der Teilflächen befindet.

Es ist daher Aufgabe der Erfindung, eine Lagerbuchse mit Fenster bereitzustellen, bei der beim Einbau in ein Lagergehäuse aus weicherem Material keine Spanbildung auftritt.

Diese Aufgabe wird mit einer Lagerbuchse gelöst, die dadurch gekennzeichnet ist, dass die Randbegrenzung mindestens in einem Scheitel mit der Längsrichtung der Buchse einen Winkel α ≠ 90°, vorzugsweise α < 90° bildet.

Beim Einpressen der Lagerbuchse verursacht insbesondere der bezüglich der Einschubrichtung hintere Abschnitt der Randbegrenzung die Spanbildung. Wenn die Randbegrenzung des Fensters lediglich in einem einzigen Scheitelbereich keine Abschnitte aufweist, die mit der Längsrichtung einen Winkel α = 90° bilden, d.h. senkrecht zur Längsrichtung angeordnet sind, ist beim Einpressen der Lagerbuchse die Einschubrichtung zu berücksichtigen. Da bereits geringe Abweichungen von 90° ausreichen, um die Spanbildung zu reduzieren bzw. zu verhindern, ist die erfindungsgemäße Ausgestaltung des Fensters für den Monteur in der Regel nicht ohne weiteres erkennbar. Um in diesen Fällen die Einbaurichtung kenntlich zu machen, sind gegebenenfalls Zusatzmaßnahmen, wie z.B. eine Markierung der Buchse usw. zweckmäßig.

Um diese Zusatzmaßnahmen zu vermeiden, ist es von Vorteil, wenn die Randbegrenzung des Fensters in allen Abschnitten mit der Längsrichtung der Buchse einen Winkel α ≠ 90° bildet. Die Buchse kann in beiden Einschubrichtungen in das Gehäuse eingepresst werden, ohne dass eine Spanbildung auftritt.

Vorzugsweise wird der Winkel α wie folgt gewählt:
45° < α < 90°, insbesondere 60° < α < 90°, sowie
45° < α < 85° und 60° < α < 85°.

Das Fenster kann rund, oval oder n-eckig ausgebildet sein.

Vorzugsweise verjüngt sich das Fenster in Längsrichtung mindestens in einem Scheitel, wobei die Randbegrenzung im Scheitelbereich vorteilhafterweise spitz zuläuft. In der Spitze weist die Randbegrenzung durch eine unvermeidliche Rundung in einem Punkt zwangsläufig einen Winkel α = 90° auf. Solche infinitesimalen Bereiche sind jedoch vernachlässigbar. Es ist wesentlich, dass keine längeren Abschnitte der Randbegrenzung senkrecht zur Längsachse verlaufen.

In der Regel sind die Fenster kreisförmig, weil in der Regel runde Stifte in die Buchse eingreifen sollen. Die kreisrunde Kontur kann beibehalten werden, wenn an mindestens einem Scheitelbereich die kreisförmige Kontur durch einen Randabschnitt unterbrochen wird, der nicht senkrecht zur Längsrichtung angeordnet ist. Es ist daher von Vorteil, wenn im betreffenden Scheitelbereich das Fenster einen dreieckförmigen Abschnitt in der Randbegrenzung aufweist.

Vorzugsweise ist das Fenster im Bereich der Teilflächen angeordnet. Bei dieser Ausführungsform wird das Fenster vorzugsweise durch zwei identische Ausnehmungen der Schmalseite der Platine gebildet, die zur Lagerbuchse umgeformt, insbesondere gerollt wird. Diese Ausführungsform hat herstellungstechnische Vorteile, weil beim Abtrennen der Platinen auch die Ausnehmungen angebracht werden können.

Das Verfahren zur Herstellung einer Lagerbuchse mit mindestens einem Fenster, dessen Randbegrenzung in Buchsenlängsrichtung gegenüberliegend einen ersten Scheitelbereich und einen zweiten Scheitelbereich aufweist, wobei die Randbegrenzung mindestens in einem Scheitelbereich mit der Buchsenlängsrichtung der Lagerbuchse einen Winkel α ≠ 90° bildet" sieht vor,
- dass von einem Bandmaterial Platinen abgetrennt werden,
- dass beim Abtrennen der Platinen an den den Stoß der Lagerbuchse bildenden Platinenseiten jeweils mindestens eine Ausnehmung ausgestanzt wird, die an mindestens einem Endabschnitt mit der/den Platinenseite/n den Winkel α bildet, und
- dass anschließend die Platinen zu Buchsen gerollt werden, wobei die an den Platinenseiten eingebrachten Ausnehmungen zusammen mindestens ein Fenster am Stoß bilden.

Das Ablängen der Platine und das Ausstanzen der Ausnehmungen kann gleichzeitig erfolgen. Es ist aber auch möglich, aus dem Bandmaterial zuerst die Fenster auszustanzen und anschließend die Platinen im Bereich der Fenster abzulängen.

Eine bevorzugte Verwendung der Lagerbuchse ist die Verwendung für die Lagerung von Exzenterwellen für kombinierte Betriebs- und Feststellbremsen von Kraftfahrzeugen. Kombinierte Betriebs- und Feststellbremsen (Kombi-Sättel) werden bei Scheibenbremsen verwendet.

Beispielhafte Ausführungsformen der Erfindung werden nachfolgend anhand der Zeichnungen näher erläutert.

Es zeigen:
- Figuren 1 bis 4: perspektivische Darstellungen von Lagerbuchsen gemäß unterschiedlicher Ausführungsformen und
- Figur 5: eine Platine für die Herstellung einer Lagerbuchse gemäß Figur 4.

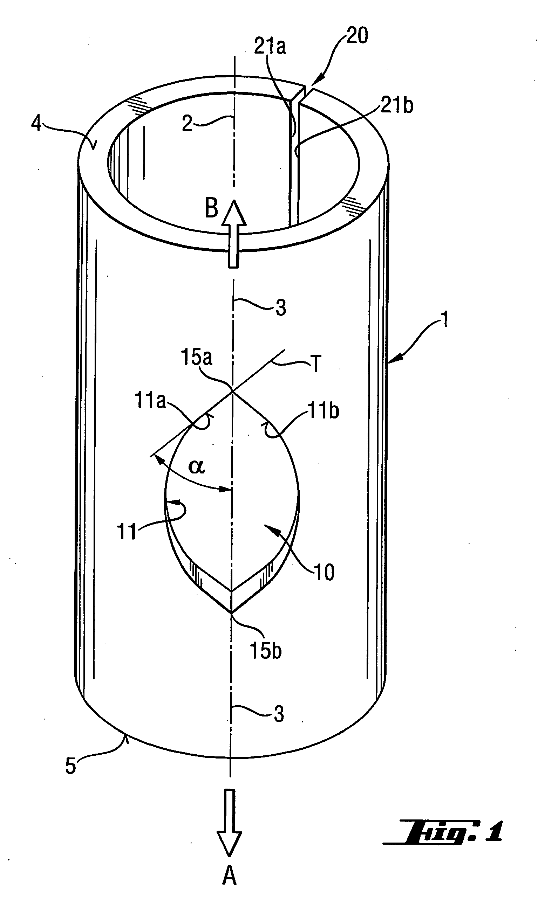

In der Figur 1 ist eine Buchse 1 perspektivisch dargestellt, die einen Stoß 20 sowie Teilflächen 21a,21b aufweist. Die Buchse 1 weist ferner an einer beliebigen Stelle ein geschlossenes Fenster 10 auf, das eine annähernd ovale Randbegrenzung 11 besitzt.

Das Fenster 10 ist, in Längsrichtung 3 betrachtet, in der Buchse 1 mittig angeordnet. Das Fenster 10 kann aber auch an jeder beliebigen anderen Stelle angeordnet sein und sich beispielsweise bis in die Stirnflächen 4 oder 5 erstrecken. In diesem Fall wäre das Fenster 10 seitlich teilweise offen ausgebildet.

Die Randbegrenzung 11 weist zwei gekrümmte Abschnitte 11a,11b auf, die in den beiden in Längsrichtung 3 liegenden Scheitelbereichen 15a,15b spitz aufeinander zulaufen. Der betreffende Winkel α zwischen der Tangente T an der Randbegrenzung 11a und der Längsrichtung 3 beträgt in der hier gezeigten Ausführungsform ca. 50°. Das Fenster 10 verjüngt sich sowohl in Einschubrichtung A als auch in Einschubrichtung B, die durch die betreffenden Pfeile angedeutet sind. Diese Lagerbuchse 10 hat den Vorteil, dass sie sowohl in Richtung A als auch in Richtung B in das Lagergehäuse eingepresst bzw. eingeschoben werden kann, ohne dass durch das Fenster 10 Späne beim Einschieben in das Lagergehäuse erzeugt werden.

Soweit in den Scheiteln 15a,15b beim Übergang der Randabschnitte 11a,11b infinitesimale Krümmungen vorhanden sind, die punktuell senkrecht zur Längsachse angeordnet sind, so werden dadurch keine Späne erzeugt.

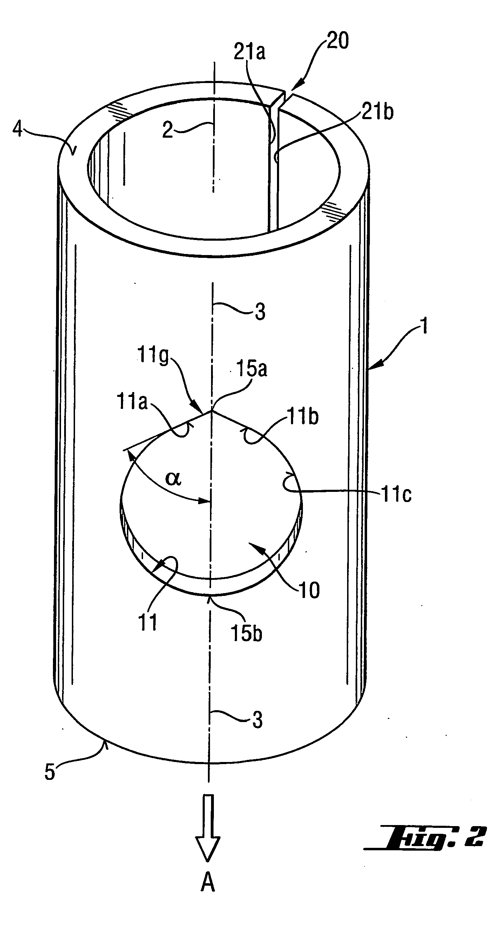

In der Figur 2 ist eine weitere Ausführungsform dargestellt, die einen kreisförmigen Abschnitt 11c aufweist. Im Scheitelbereich 15a geht diese kreisförmige Kontur der Randbegrenzung 11c in zwei in etwa gradlinig verlaufende Abschnitte 11a,11b über, die im Scheitelpunkt 15a spitz aufeinander zulaufen und somit keinen Abschnitt aufweisen, der senkrecht zur Längsrichtung 3 angeordnet ist. Die beiden geraden Abschnitte 11a,11b bilden zusammen die dachförmige Kontur 11g. Da im Scheitelbereich 15b eine derartige Kontur 11g fehlt, muss die Lagerbuchse 1 zur Vermeidung von Spanbildung in Richtung A in das Lagergehäuse eingeschoben werden.

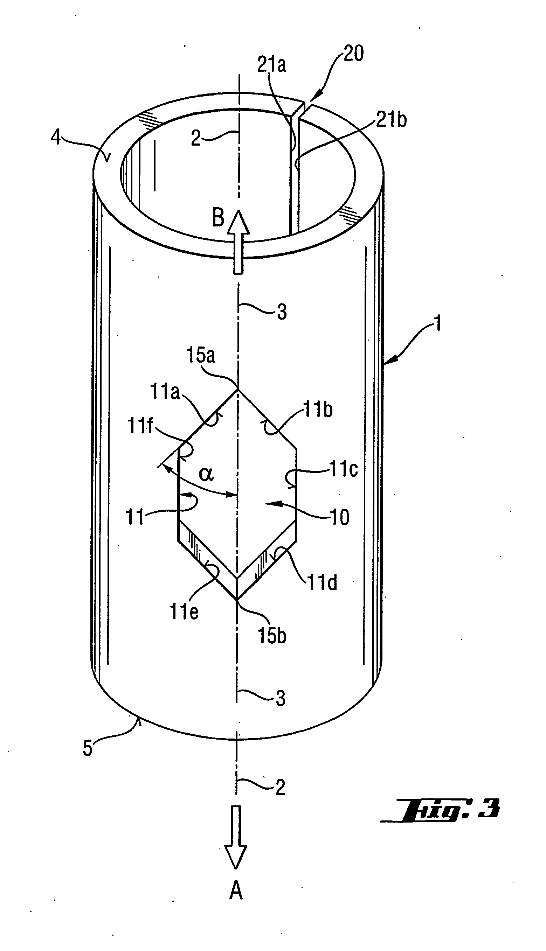

In der Figur 3 ist eine weitere Ausführungsform einer Lagerbuchse 1 dargestellt, bei der das Fenster 10 sechseckig ausgeführt ist. Die Randbegrenzung 11 besteht aus geraden Abschnitten 11a bis 11f. In den Scheitelbereichen 15a, 15b laufen die Randbegrenzungsabschnitte 11a, 11b bzw. 11d und 11e spitz aufeinander zu, so dass der Winkel α in dieser Ausführungsform 45° beträgt.

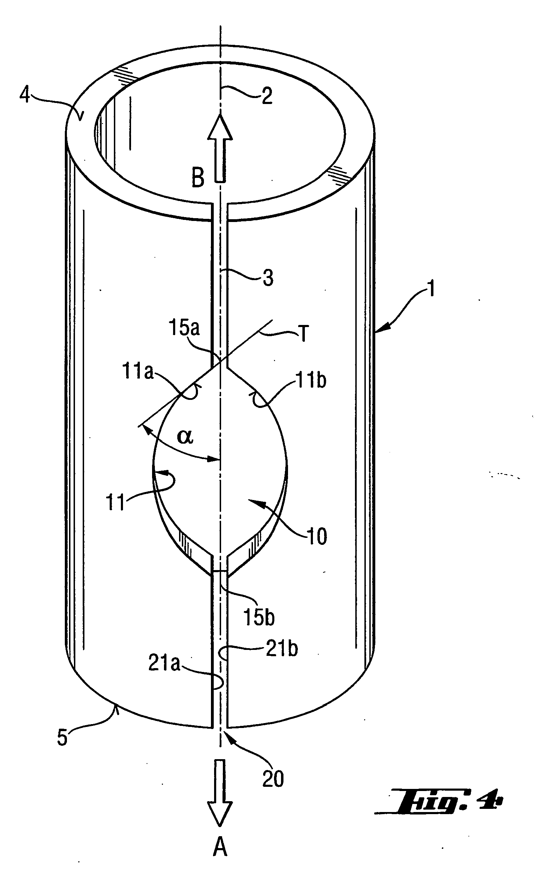

In der Figur 4 ist eine weitere Ausführungsform einer Lagerbuchse 1 dargestellt, die ein Fenster 10 aufweist, das bezüglich der Randbegrenzung 11 der Ausführung in Figur 1 entspricht, mit dem Unterschied, dass das Fenster 10 im Bereich der Teilflächen 21a,21b angeordnet ist. Das Fenster 10 wird durch zwei gleichgroße Ausnehmungen in den Endbereichen der Platine durch deren Ausstanzung und somit nach dem Rollformen der Buchse im Bereich des Stoßes 20 gebildet.

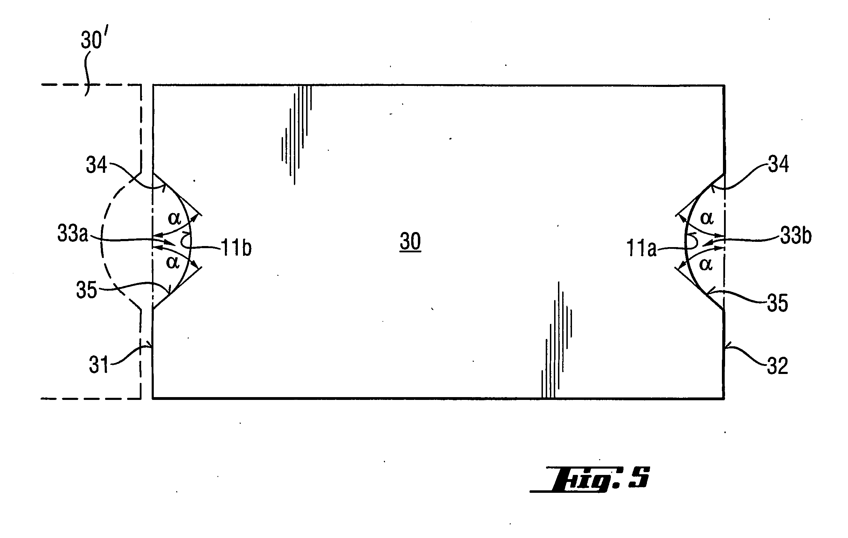

Wie der Figur 5 zu entnehmen ist, können entsprechende Ausnehmungen 33a,b an den Schmalseiten 31,32 der Platine 30 eingebracht werden, aus der die Lagerbuchse 1 hergestellt wird. Die Ausnehmungen besitzen Endabschnitte 34,35, die an die Platinenseiten 31,32 angrenzen, die die Schmalseiten der Platine 30,30' bilden. Diese Endabschnitte 34,35 bilden mit den Platinenseiten 31,32 den Winkel α der < 90° ist. In der Figur 5 ist außerdem die Platine 30' gestrichelt eingezeichnet, um anzudeuten, dass die Platine von einem Bandmaterial abgetrennt wird. Das Abtrennen der Platine 30 kann in einem Verfahrensschritt mit der Einbringung der Ausnehmung 33a erfolgen, so dass kein zusätzlicher Verfahrensschritt erforderlich ist, um das Fenster 10 herzustellen.

### Bezugszeichenliste

- 1: Lagerbuchse
- 2: Längsachse
- 3: Buchsenlängsrichtung
- 4: Stirnfläche
- 5: Stirnfläche
- 10: Fenster
- 11: Randbegrenzung
- 11a-11f: Abschnitte der Randbegrenzung
- 11g: dachförmige Kontur
- 15a,b: Scheitel
- 20: Stoß
- 21a,b: Teilfläche
- 30: Platine
- 31: Schmalseite
- 32: Schmalseite
- 33a,b: Ausnehmung
- 34: Endabschnitt
- 35: Endabschnitt

- α: Winkel T/3
- T: Tangente
- A: Einschubrichtung (Montagerichtung)
- B: Einschubrichtung (Montagerichtung)

## Patentansprüche

1. Lagerbuchse (1) mit mindestens einem Fenster (10), dessen Randbegrenzung (11) in Buchsenlängsrichtung (3) gegenüberliegend einen ersten Scheitelbereich (15a) und einen zweiten Scheitelbereich (15b) aufweist, **dadurch gekennzeichnet,**
**dass** die Randbegrenzung (11) mindestens in einem Scheitelbereich (15a,b) mit der Buchsenlängsrichtung (3) der Lagerbuchse (1) einen Winkel α ≠ 90° bildet.

2. Lagerbuchsen nach Anspruch 1, **dadurch gekennzeichnet, dass** die Randbegrenzung (11) des Fensters (10) in allen Abschnitten (11 α-f) mit der Buchsenlängsrichtung (3) der Lagerbuchse (1) einen Winkel α ≠ 90° bildet.

3. Lagerbuchse nach Anspruch 1 oder 2, **dadurch gekennzeichnet, dass** die Randbegrenzung (11) mit der Buchsenlängsrichtung (3) einen Winkel α mit 45° < α < 90° bildet.

4. Lagerbuchse nach einem der Ansprüche 1 bis 3, **dadurch gekennzeichnet, dass** das Fenster (10) rund, oval oder n-eckig ausgebildet ist.

5. Lagerbuchse nach einem der Ansprüche 1 bis 4, **dadurch gekennzeichnet, dass** das Fenster (10) sich in Buchsenlängsrichtung (3) mindestens in einem Scheitel (15a,b) verjüngt, wobei die Randbegrenzung (11) spitz zuläuft.

6. Lagerbuchse nach einem der Ansprüche 1 bis 5, **dadurch gekennzeichnet, dass** die Randbegrenzung (11) des Fensters (10) mindestens einen kreisförmigen Abschnitt (11c) und mindestens in einem Scheitelbereich (15a,b) einen dachförmigen Abschnitt (11 g) aufweist.

7. Lagerbuchse nach einem der Ansprüche 1 bis 6 mit Teilflächen (21 a,b) und Stoß (20), **dadurch gekennzeichnet, dass** das Fenster (10) im Bereich der Teilflächen (21 a,b) angeordnet ist.

8. Verwendung der Lagerbuchse nach Anspruch für die Lagerung von Exzenterwellen für kombinierte Betriebs- und Feststellbremsen von Kraftfahrzeugen.

9. Verfahren zur Herstellung einer Lagerbuchse (1) mit mindestens einem Fenster (10), dessen Randbegrenzung (11) in Buchsenlängsrichtung (3) gegenüberliegend einen ersten Scheitelbereich (15a) und einen zweiten Scheitelbereich (15b) aufweist, wobei die Randbegrenzung mindestens in einem Scheitelbereich (15a,15b) mit der Buchsenlängsrichtung der Lagerbuchse (1) einen Winkel α ≠ 90° bildet, **dadurch gekennzeichnet,**
- **dass** von einem Bandmaterial Platinen (30,30') abgetrennt werden,
- **dass** beim Abtrennen der Platinen an den den Stoß der Lagerbuchse bildenden Platinenseiten jeweils mindestens eine Ausnehmung ausgestanzt wird, die an mindestens einem Endabschnitt (34,35) mit der/den Platinenseite/n (31,32) den Winkel α bildet, und
- **dass** anschließend die Platinen zu Buchsen gerollt werden, wobei die an den Platinenseiten eingebrachten Ausnehmungen zusammen mindestens ein Fenster (10) bilden.

## Claims

1. Bearing bush (1) having at least one window (10), the edge boundary (11) of which has a first apex region (15a) and a second apex region (15b) opposite one another in bush longitudinal direction (3), **characterised in that** the edge boundary (11) at least in one apex region (15a, b) forms an angle α ≠90° with the bush longitudinal direction (3) of the bearing bush (1).

2. Bearing bush according to claim 1, **characterised in that** the edge boundary (11) of the window (10) in all sections (11a-f) forms an angle α #90° with the bush longitudinal direction (3) of the bearing bush (1).

3. Bearing bush according to claim 1 or 2, **characterised in that** the edge boundary (11) forms an angle α where 45° < α < 90° with the bush longitudinal direction (3).

4. Bearing bush according to one of claims 1 to 3, **characterised in that** the window (10) is designed to be round, oval or n-cornered.

5. Bearing bush according to one of claims 1 to 4, **characterised in that** the window (10) is tapered in bush longitudinal direction (3) at least in one apex (15a, b), wherein the edge boundary (11) runs to a point.

6. Bearing bush according to one of claims 1 to 5, **characterised in that** the edge boundary (11) of the window (10) has at least one circular section (11c) and at least in one apex region (15a, b) a roof-like section (11g).

7. Bearing bush according to one of claims 1 to 6, with partial surfaces (21a, b) and butt joint (20), **characterised in that** the window (10) is arranged in the region of the partial surfaces (21a, b).

8. Use of the bearing bush according to claim 1 for the mounting of eccentric shafts for combined service brakes and parking brakes of motor vehicles.

9. Process for producing a bearing bush (1) having at least one window (10), the edge boundary (11) of which has a first apex region (15a) and a second apex region (15b) opposite one another in bush longitudinal direction (3), wherein the edge boundary at least in one apex region (15a, 15b) forms an angle α 90° with the bush longitudinal direction (3) of the bearing bush (1),
**characterised in that**
- plates (30, 30') are separated off from a strip material,
- **in that** during separation of the plates at the plate sides forming the butt joint of the bearing bush, in each case at least one recess is punched out which forms the angle α with the plate side/s (31, 32) at least at one end section (34, 35), and
- **in that** then the plates are rolled to form bushes, wherein the recesses introduced on the plate sides together form at least one window (10).

## Revendications

1. Douille de palier (1) comprenant au moins une fenêtre (10) dont la délimitation de bord (11) présente une première zone de sommet (15a) et une deuxième zone de sommet (15b) opposées dans le sens longitudinal (3) de la douille, **caractérisée en ce que** la délimitation de bord (11) forme au moins dans une zone de sommet (15a, 15b) un angle α différent de 90° avec le sens longitudinal (3) de la douille de palier (1).

2. Douille de palier selon la revendication 1, **caractérisée en ce que** la délimitation de bord (11) de la fenêtre (10) forme dans toutes ses parties (11a-f) un angle α différent de 90° avec le sens longitudinal (3) de la douille de palier (1).

3. Douille de palier selon la revendication 1 ou 2, **caractérisée en ce que** la délimitation de bord (11) forme avec le sens longitudinal (3) de la douille un angle α avec 45° < α < 90°.

4. Douille de palier selon l'une des revendications 1 à 3, **caractérisée en ce que** la fenêtre (10) est réalisée ronde, ovale ou n-gonale.

5. Douille de palier selon l'une des revendications 1 à 4, **caractérisée en ce que** la fenêtre (10) se rétrécit dans le sens longitudinal (3) de la douille au moins en un sommet (15a, 15b), sachant que la délimitation de bord (11) se termine en pointe.

6. Douille de palier selon l'une des revendications 1 à 5, **caractérisée en ce que** la délimitation de bord (11) de la fenêtre (10) présente au moins une partie circulaire (11c) et une partie en forme de toit (11g) au moins dans une zone de sommet (15a, 15b).

7. Douille de palier selon l'une des revendications 1 à 6 avec des faces de séparation (21a, 21b) et un joint de séparation (20), **caractérisée en ce que** la fenêtre (10) est disposée dans la région des faces de séparation (21a, 21b).

8. Utilisation de la douille de palier selon la revendication 1 pour le montage d'arbres excentriques pour des freins combinés de service et de stationnement de véhicules automobiles.

9. Procédé de fabrication d'une douille de palier (1) comprenant au moins une fenêtre (10) dont la délimitation de bord (11) présente une première zone de sommet (15a) et une deuxième zone de sommet (15b) opposées dans le sens longitudinal (3) de la douille, sachant que la délimitation de bord (11) forme au moins dans une zone de sommet (15a, 15b) un angle α différent de 90° avec le sens longitudinal (3) de la douille de palier (1), **caractérisé**
- **en ce qu'**on tronçonne des flans (30, 30') à partir d'un feuillard,
- **en ce que**, lors du tronçonnage des flans, on découpe au moins un évidement sur chacun des côtés du flan qui forment le joint de séparation de la douille de palier, évidement qui forme au moins dans une partie terminale (34, 3 5) l'angle α avec ledit côté (31, 32) du flan,
- et **en ce que** les flans sont ensuite roulés pour former des douilles, sachant que les évidements ménagés sur les côtés des flans forment conjointement au moins une fenêtre (10).
